Europäisches Patentamt

European Patent Office

Office européen des brevets

(19)

(11) **EP 0 439 160 B1**

(12) **EUROPEAN PATENT SPECIFICATION**

(45) Date of publication and mention
of the grant of the patent:
**10.04.1996 Bulletin 1996/15**

(51) Int Cl.6: **C08L 25/06**, C08L 51/04
// (C08L25/06, 51:04)

(21) Application number: **91100879.5**

(22) Date of filing: **24.01.1991**

(54) **High gloss, impact resistant styrene-based resin composition**

Hochglänzende schlagfeste Styrolharzzusammensetzung

Composition de polymère de styrène résistant aux chocs et à haute brillance

(84) Designated Contracting States:
**BE CH DE ES FR GB IT LI NL SE**

(30) Priority: **26.01.1990 JP 14852/90**

(43) Date of publication of application:
**31.07.1991 Bulletin 1991/31**

(73) Proprietor: **IDEMITSU PETROCHEMICAL CO.,
LTD.
Minato-ku, Tokyo (JP)**

(72) Inventors:
 • **Yamazaki, Akio, c/o Idemitsu Petrochemical
   Ichihara-shi Chiba-ken (JP)**
 • **Tsubokura, Yutaka,
   c/o Idemitsu Petrochemical
   Ichihara-shi Chiba-ken (JP)**
 • **Suetsugu, Yoshiyuki,
   c/o Idemitsu Petrochemical
   Ichihara-shi Chiba-ken (JP)**

(74) Representative: **Türk, Gille, Hrabal, Leifert
   Brucknerstrasse 20
   D-40593 Düsseldorf (DE)**

(56) References cited:
 **EP-A- 404 954          EP-A- 0 167 707
 EP-A- 0 240 903        EP-A- 0 259 623
 EP-A- 0 265 142        WO-A-85/02406**

Remarks:
The file contains technical information submitted
after the application was filed and not included in
this specification

## Description

BACK GROUND OF THE INVENTION

The present invention relates to a novel high gloss, impact resistant styrene-based resin composition and more particularly to a styrene-based resin composition which is excellent in the balance of gloss, stiffness and impact resistance.

Heretofore, for the purpose of improving impact resistance of a styrene-based resin, polystyrene has been blended with a rubber-like polymer or styrene has been polymerized in the presence of a rubber-like polymer on a commercial scale to produce a so-called rubber-modified polystyrene resin composition in which styrene is partially graft polymerized to the rubber-like polymer and the remainder of styrene is converted into polystyrene and thus which is in the state that a graft copolymer of the rubber-like polymer/styrene and polystyrene are blended.

It is known that in the above rubber-modified polystyrene resin composition, the rubber-like polymer is usually dispersed in the styrene-based polymer in a spherical form, and the size of particle has an intimate relation with impact resistance, stiffness and gloss. That is, as the size of rubber-like polymer particle is smaller, stiffness and gloss are better. To the contrary, as the size of polymer particle is smaller, impact resistance is more decreased, and below a certain limit, an effect of improving impact resistance is lost.

In the conventional rubber-modified polystyrene resin composition, to obtain the desired impact resistance, a rubber-like polymer is dispersed in a polystyrene resin in the form of particles having a particle diameter of at least 1 μm, usually in the range of 1 to 10 μm. The conventional rubber-modified polystyrene resin, however, has a problem of being limited in use because it is poor in gloss and stiffness.

Accordingly, in order to solve the above problems, there is employed the form of dispersion of rubber particles that is of the single occlusion structure (also called the shell/core type), in which the particle diameter is about 0.1 to 0.7 μm, whereby a rubber-modified styrene-based resin composition having good gloss and impact resistance is obtained (West Germany Patent Laid-Open No. 3,345,377, Japanese Patent Application Laid-Open Nos. 112646/1988 and 261444/1989). This composition, however, is not sufficiently satisfactory in impact resistance, particularly falling weight impact strength, although it is improved in gloss.

EP-A-0265142 discloses a composition of an unmodified polystyrene such as a general purpose polystyrene and a core/shell polymer, which is in the form of particles having an average particle diameter of no more than 250 nanometres and a toluene swell index of from 13 to 45. The rubbery polymer may be a copolymer of conjugated diolefin with, for example styrene.

WO 85/02406 describes a rubber reinforced polymer comprising a continuous matrix phase of styrene and dispersed therein discrete rubber particles having a shell/core morphology with a volume average particle size of 0.1 to 0.2 micron including all occlusions. The rubbery component comprises an amount of styrene polymer being chemically bonded in blocks to the alkadiene polymer.

SUMMARY OF THE INVENTION

The present invention is intended to overcome the above problems of the prior art rubber-modified styrene-based compositions, and an object of the present invention is to provide a rubber-modified styrene-based resin composition which is excellent in the balance of gloss, stiffness and impact resistance.

The present inventors have found that a rubber-modified styrene-based resin composition of the occlusion structure which is improved in gloss and impact resistance, particularly falling weight impact strength is obtained by specifying the micro structure of dispersed rubber particles.

As a result of further investigations, they have further discovered that a composition prepared by compounding a rubber-modified styrene-based resin of the occlusion structure and an unmodified general-purpose polystyrene in a specified ratio is excellent in the balance of gloss, stiffness and impact resistance.

The present invention relates to a high gloss, impact resistant styrene-based resin composition containing (A) a rubber-modified styrene-based resin in which the form of dispersed rubber is an occlusion structure, and (B) an unmodified polystyrene in a weight ratio of 20:80 to 95:5, wherein said rubber-modified styrene-based resin has a dispersed rubber form, which has at least 70 % of the occlusion structure with a plane of symmetry, said occlusion structure refers to the structure that not more than five occlusion units comprising a core of the styrene-based polymer and a shell of the rubber-like polymer are contained in one particle and at least 50 % of the particles contain only one occlusion unit, and the dispersed rubber form is such, that the rubber-like polymer in the form of particles having an area average diameter of 0.1 μm to 0.7 μm and a ratio of area average diameter to number average particle diameter of 1.0/1 to 2.5/1 is dispersed in the styrene-based polymer; the volume fraction of the rubber-like polymer particles in the rubber-modified styrene-based resin is at least 0.18, said volume fraction is calculated from the equation $k = \phi_R\{1-[(D_s/2-\lambda)/(D_s/2)]^3\}^{-1}$ (wherein $\phi_R$ indicates a volume fraction of the rubber-like polymer in the composition, $D_s$ indicates an area average particle diameter (radius) of the rubber-like polymer, and $\lambda$ indicates a thickness of a rubber-like polymer phase and is not more than 0.10 μm).

BRIEF DESCRIPTION OF THE DRAWINGS

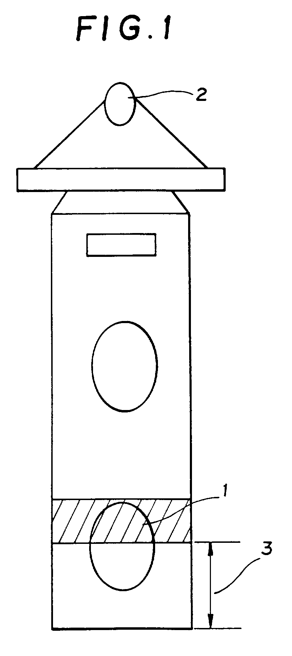

Fig. 1 is a schematic view of the mold used to determine the degree of attachment of the oily substance to the mold cavity. In this figure, the reference numeral 1 indicates the area where the oily substance attaches; 2, the gate;, and 3, the short shot part.

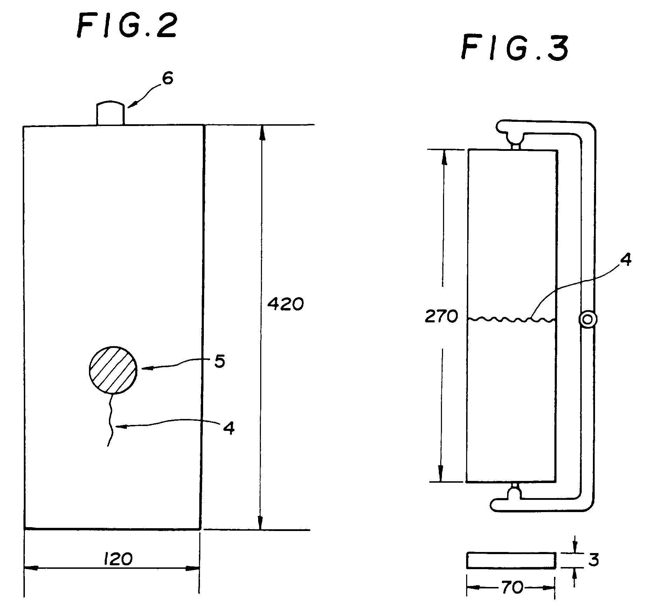

Fig. 2 is a schematic view illustrating the strip mold used to produce the injection molding for evaluation of the appearance of the weld portion, and Fig. 3 is a schematic view illustrating the new oriented mold used to produce the injection molding for evaluation of the strength of the weld portion. In this figure, the reference numerals 4 indicates the weld; 5, the mold insert; and 6, the gate. The unit is mm.

BEST MODE FOR CARRYING OUT THE INVNETION

In the composition of the present invention, a rubber-modified styrene-based resin in which the form of dispersed rubber is the occlusion structure is used as the component (A). The occlusion structure as used herein refers to the structure that not more than five occlusion units comprising a core of the styrene-based polymer and a shell of the rubber-like polymer are contained in one rubber particle, and at least 50% of the particles contain only one occlusion unit.

The rubber-modified styrene-based resin as the component (A) has a dispersed rubber form which has at least 70% of the occlusion structure, and if 30% or more of particles are of the salami structure, for example, good gloss may not be obtained. In the present invention, therefore, high impact resistant polystyrene (HIPS) which contains at least six occlusion units and is of the usual salami structure can be compounded in a proportion such that the number of rubber particles is less than 30%.

A rubber-modified styrene-based resin prepared by dispersing rubber-like polymer particles in a styrene-based resin, said dispersion rubber-like polymer particle having an occlusion structure with a plane of symmetry, anarea average particle diameter of 0.1 to 0.7 μm, preferably 0.2 to 0.6 μm, and a ratio of area average particle diameter to number average particle diameter of 1.0 to 2.5, preferably 1.0 to 1.8, is used as the rubber-modified styrene-based resin. If the area average particle diameter is less than 0.1 μm, impact resistance may not be sufficiently high, and if it is more than 0.7 μm, gloss tends to decrease. If the ratio of area average particle diameter to number average particle diameter is more than 2.5, gloss tends to decrease. Moreover, since particles of dispersed rubber-like polymer are of the occlusion structure with a plane of symmetry, impact resistance is more improved.

In the rubber-modified styrene-based resin, K as calculated from the equation:

$$K = \phi_R \{1 - [((D_s/2) - \lambda)/(D_s/2)]^3\}^{-1} \qquad (I)$$

(where $\phi_R$ is a volume fraction of the rubber-like polymer, $D_S$ is an area average particle diameter of the rubber-like polymer, and $\lambda$ is a thickness of the rubber-like polymer phase and is not more than 0.10 μm.) is at least 0.18, preferably at least 0.20 and more preferably at least 0.22. If this K value is less than 0.18, a falling weight impact strength is not sufficiently high; for example, it is not always sufficiently high as a material for a housing of large-sized television sets.

The volume fraction ($\phi_R$) of the rubber-like polymer can be calculated from the equation:

$$\phi_R = \{[(1/W_R) - 1](\rho_R/\rho_{PS}) + 1\}^{-1} \qquad (II)$$

In the equation, $\rho_R$ indicates a specific gravity of the rubber-like polymer and it is 0.90, and $\rho_{PS}$ indicates a specific gravity of the styrene based polymer and it is 1.05. $W_R$ is a weight fraction of the rubber-like polymer contained in the composition and can be calculated from the equation:

$$W_R = W_D(1-S)/[(1-W_D)X + W_D] \qquad (III)$$

where X = conversion of a styrene-based monomer in polymerization,

S = styrene unit content of charged rubber-like polymer, for example, an SB block copolymer (measured by IR),

$W_D$ = content of charged rubber-like polymer, for example, an SB block copolymer in a styrene-based monomer solution.

The area average particle diameter ($D_s$) and number average particle diameter ($D_n$) of the rubber-like polymer can be determined as follows. That is, pellets of rubber-modified styrene-based resin composition which is small in orientation and have been treated with a 3% by weight aqueous solution of osmium tetraoxide are sliced by the use of a super microtome and then a transmission type electron micrograph of the slice is taken. Diameters (D) in the long axis of 1,000 rubber-like polymer particles are measured and their area average value is calculated from the following equation:

$$D_s = \frac{\Sigma n D^3}{\Sigma n D^2},$$

$$D_n = \frac{\Sigma n D}{\Sigma n}$$

(where n is the number of rubber-like polymer particles having the diameter D) to thereby obtain area average particle diameters ($D_s$) and number average particle diameter ($D_n$).

The thickness ($\lambda$) of the rubber-like polymer phase is determined by obtaining a transmission type electron micrograph in the same manner as described above, measuring the thickness $\lambda_i$ of rubber-like polymer phase of 100 of rubber-like polymer particles in which the rubber-like polymer phase is present only in the boundary, i.e., rubber-like polymer particles which are cut nearly in the center thereof, and calculating a number average value from the following equation:

$$\lambda = (\lambda_1 + \lambda_2 + \lambda_3 + ..... + \lambda_{100})/100 \ .$$

The ratio of occlusion structure particles is evaluated by obtaining a transmission type electron micrograph in the same manner as described above, and measuring a ratio of the number of occlusion structure particles to 1,000 particles chosen at random.

In the rubber-modified styrene-based resin, it is preferable that the rubber-like polymer particles have a specified micro-structure. That is, it is preferable that the weight ratio of the gel content to the rubber-like polymer is in the range of 1.1:1 to 4.0:1, more preferably 1.4:1 to 3.6:1, and that the swelling index is preferable in the range of 5 to 20, more preferably 7 to 18. If the weight ratio of the gel content to the rubber-like polymer is less than 1.1:1, impact resistance is not always sufficiently high. If it is more than 4.0:1 ratio), there is a danger of gloss being decreased. If the swelling index is outside the above range, the impact resistance tends to decrease.

In the rubber-modified styrene-based resin, it is preferable that the styrene-based polymer as the component (A) and the rubber-like polymer as the component (B) are in proportions of 70 to 92% by weight and 30 to 8% by weight, respectively, and more preferably 72 to 90% by weight and 28 to 10% by weight, respectively. If the content of the rubber-like polymer is less than 8% by weight, the effect of improving impact resistance is not sufficiently exhibited. If it is more than 30% by weight, gloss and fluidity tend to decrease.

In the rubber-modified styrene-based resin, the thickness ($\lambda$) of the rubber-like polymer phase is not more than 0.10 $\mu$m. To make the thickness ($\lambda$) of the rubber-like polymer phase not less than 0.10 $\mu$m, it is necessary to increase the molecular weight of the rubber-like polymer to be used (for example, when styrene-butadiene block copolymer rubber is used, it is necessary that the molecular weight of the butadiene polymer block portion is made not less than 800,000).

If such high molecular weight rubber-like polymer are used to prepare the rubber-modified styrene-based resin, the viscosity of the polymerization reaction solution is undesirably markedly increased. The thickness ($\lambda$) of the rubber-like polymer layer is preferably made 0.005 to 0.07 $\mu$m.

The rubber-modified styrene-based resin composition as the component (A) can be prepared by polymerizing styrene or styrene and a monomer copolymerizable therewith in the presence of a rubber-like polymer.

As such copolymerizable monomers, aromatic monovinyl compounds such as $\alpha$-methylstyrene, vinyltoluene, vinylethylbenzene, vinylxylene, p-tert-butylstyrene, $\alpha$-methyl-p-methylstyrene and vinylnaphthalene, acrylonitrile, methyl methacrylate, methyl acrylate, methacrylic acid, acrylic acid, maleic anhydride, phenylmaleimide and the like can be used. These monomers can be used alone or as mixture comprising two or more thereof. The copolymerizable monomer is used in a proportion of usually not more than 50% by weight, preferably not more than 40% by weight based on the total weight of all monomers including styrene.

The type of the rubber-like polymer as the component (B) is not critical. Those conventionally used in the usual rubber-modified styrene-based resin compositions, such as natural rubber, synthetic rubbers, e.g., poly-butadiene rubber, polyisoprene rubber, styrene-butadiene copolymer rubber, styreneisoprene copolymer rubber, butyl rubber, and ethylene-propylene based copolymer rubber, or graft copolymer rubbers of these rubbers and styrene can be used. Of these, styrene-butadiene copolymer rubber is preferred.

As this styrene-butadiene block copolymer rubber, a rubber having a molecular weight in the range of 50,000 to 500,000 and a polymer block content, said polymer block being formed of styrenes, in the range of 10 to 60% by weight is particularly preferred. If the molecular weight is less than 50,000, impact resistance is not sufficiently high, and if it is more than 500,000, fluidity at the time of molding is undesirably decreased.

As this styrene-butadiene block copolymer, the mixture of this styrene-butadiene block polymer and poly-butadiene rubber having a molecular weight of about 50,000 to 500,000 may be used.

The molecular weight of the rubber-like polymer is a weight average molecular weight (calculated as polystyrene) as determined by Gel Permeation Chromatogram (G.P.C).

This polymerization method is not critical; conventionally employed methods such as an emulsion polymerization method, a bulk polymerization method, a solution polymerization method, a suspension polymerization method, or a multi-stage polymerization method such as a bulk-suspension two stage polymerization method can be employed.

One of the suitable methods of preparing the resin composition of the present invention according to the bulk-suspension two stage polymerization method will hereinafter be explained. In the first place, a rubber-like polymer is added to styrene or a mixture of styrene and a monomer copolymerizable therewith and dissolved by heating, if necessary. This dissolution is preferably carried out as uniformly as possible.

Then, to the resulting solution, a molecular weight modifier (chain transfer agent), such as alkylmercaptan, and a polymerization initiator, such as an organic peroxide, which is to be used if necessary are added, and preliminary polymerization is carried out by a bulk polymerization method while heating at a temperature of about 70 to 150°C and stirring until the degree of polymerization reaches 10 to 60%. At this polymerization stage, the rubber-like polymer is dispersed in a particle form by stirring.

Then, the above preliminary polymerization solution is suspended in water by the use of calcium triphosphate or polyvinyl alcohol, for example, as a suspending agent, and suspension polymerization (main polymerization) is carried out until the degree of polymerization reaches about 100%. If necessary, after the main polymerization step, heating may be continued.

The above molecular weight modifier includes, for example, $\alpha$-methylstyrene dimer, mercaptans such as n-dodecylmercaptan, tert-dodecylmercaptan, 1-phenylbutene-2-fluorene, dipentene, chloroform and the like, terpenes and halogen compounds and the like.

The polymerization initiator which is to be used if necessary, includes organic peroxides, for example, peroxyketals such as 1,1-bis(tert-butylperoxy)cyclohexane and 1,1-bis(tert-butylperoxy)3,3,5-trimethylcyclohexane, dialkylperoxides such as dicumyl peroxide, di-tert-butyl peroxide, and 2,5-dimethyl-2,5-di(tert-butylperoxy)hexane, diaryl peroxides such as benzoyl peroxide and m-toluoyl peroxide, peroxy dicarbonates such as dimyristylperoxy dicarbonate, peroxy esters such as tert-butylperoxyisopropyl carbonate, ketone peroxides such as cyclohexanone peroxide and hydroperoxides such as p-menthane hydroperoxide.

The thickness, $\lambda$, of the rubber-like polymer phase can be controlled by chaning the molecular weight of the butadiene polymer block portion when styrene-butadiene block copolymer rubber, for example, is used as the rubber-like polymer. That is, if the molecular weight of the butadiene polymer block portion is decreased, $\lambda$ is decreased, and if it is increased, $\lambda$ is increased.

On the other hand, the radius (R) of the rubber-like polymer particle can be controlled by controlling a rate of stirring during polymerization, or a molecular weight of a styrene polymer block portion when a styrene-butadiene-based block copolymer is used as the rubber-like polymer, or by adding a chain transfer agent, or by compounding polybutadiene rubber to the styrene-butadiene-based block copolymer. That is, if the rate of stirring during polymerization is increased, R is decreased, and vice versa. If the molecular weight of the styrene polymer block portion is increased, R is decreased, and vice versa. If the chain transfer agent is not used, R is small, and vice versa. If the polybutadiene rubber is used, R is increased, and vice versa.

Then the slurry thus obtained is treated by the usual technique to obtain a bead-like reaction product. This product is taken out, dried and then pelletized to obtain a rubber-modified styrene-based resin. The molecular weight of the matrix portion of the rubber-modified styrene-based resin thus obtained is 100,000 to 300,000 and preferably 130,000 to 280,000. If the molecular weight is less than 100,000, impact resistance is poor, and if it is more than 300,000, fluidity at the time of molding is not sufficiently high.

In the composition of the present invention, general-purpose polystyrene is used as the component (B). This general-purpose polystyrene is not always critical; those on the market as the general-purpose polystyrene as obtained by polymerizing a styrene monomer according to known polymerization techniques such as bulk polymerization, suspension polymerization and bulk-suspension polymerization can be used.

In the composition of the present invention, the rubber-modified styrene-based resin as the component (A) and the general-purpose polystyrene as the component (B) should be compounded in a weight ratio of 20:80 to 95:5, preferably 30:70 to 85:15. If the amount of the component (A) used is less than 20% by weight based on the total weight of the components (A) and (B), impact resistance is not sufficiently high, and if it is more than 95% by weight, gloss tends to decrease.

The composition of the present invention comprises basically the components (A) and (B), but for the purpose of increasing heat stability, or preventing attachment of an oily substance to a mold cavity at the time of injection molding, fluid paraffin can be added as a component (C), if necessary.

This fluid paraffin which is used, if necessary, is not always critical; those commonly used as fluidity increasing agent for polystyrene can be used. In particular, those having a polynuclear aromatic hydrocarbon content of not more than 0.2% by weight, preferably not more than 0.1% by weight are suitably used. In addition, those having a 2% distillation point of at least 240°C and a 95% distillation point of not more than 350°C as determined according to ASTM D1160 are particularly preferred.

Addition of a suitable amount of fluid paraffin increases heat stability of the resulting composition, and prevents attachment of an oily substance to a mold cavity at the time of injection molding. In the composition of the present invention, it is necessary that the amount of the fluid paraffin added be chosen within the range of 0.1 to 6 parts by weight, preferably 0.5 to 4 parts by weight per 100 parts by weight of the component (A). If the amount of the fluid paraffin added is less than 0.1 part by weight, the effect of the fluid paraffin is not sufficiently exhibited, and if it is more than 6 parts by weight, heat resistance tends to decrease.

In the composition of the present invention, as well as the components (A) and (B), and the component (C) to be added, if necessary, a hindered amine-based compound (Component (D)) and a benzotriazole-based compound (Component (E)) can be added in order to markedly improve light resistance.

As the hindered amine-based compound, a heterocyclic hindered amine compound is preferably used. This heterocyclic hindered amine compound means a compound comprising a 6-membered heterocyclic ring containing a hindered nitrogen atom and in some cases, other different atoms, preferably a nitrogen or oxygen atom. Examples of such compounds include di-(2,2,6,6-tetramethyl-4-piperidyl)sebacate, 4-benzoyloxy-2,2,6,6-tetramethylpiperidine, a condensate of succinic acid and N-(2-hydroxyethyl)-2,2,6,6-tetramethyl-4-hydroxypiperidine, 1,2,3,4-tetra-(2,2,6,6-tetramethyl-4-piperidyl)butane tetracarboxylate, 1,4-di-(2,2,6,6-tetramethyl-4-piperidyl)-2,3-butanedione, tris-(2,2,6,6-tetramethyl-4-piperidyl)trimelitate, 1,2,2,6,6-pentamethyl-4-piperidyl stearate, 1,2,2,6,6-pentamethyl-4-piperidyl n-octoate, bis-(1,2,2,6,6-pentamethyl-4-piperidyl) sebacate, tris-(2,2,6,6-tetramethyl-4-piperidyl) nitrile acetate, 4-hydroxy-2,2,6,6-tetramethylpiperidine, 4-hydroxy-1,2,2,6,6-pentamethylpiperidine, and the like. Of these compounds, di-(2,2,6,6-tetramethyl-4-piperidyl)sebacate, and a condensate of succinic acid and N-(2-hydroxyethyl)-2,2,6,6-tetramethyl-4-hydroxypiperidine are preferred.

These hindered amine-based compounds may be used singly or in combination with each other. The amount of the hindered amine-based compound added should be chosen within the range of 0.05 to 3 parts by weight, preferably 0.1 to 2.5 parts by weight per 100 parts by weight of the rubber-modified styrene-based resin as the component (A). If the amount of the hindered amine-based compound added is less than 0.05 part by weight, the effect of increasing light resistance is not sufficiently exhibited, and if it is more than 3 parts by weight, no additional effect can be obtained.

Examples of the benzotriazole-based compound are 2-(2'-hydroxy-5'-methylphenyl)benzotriazole, 2-(2'-hydroxy-5'-tert-butylphenyl)benzotriazole, 2-(2'-hydroxy-5'-amylphenyl)-benzotriazole, 2-(2'-hydroxy-4'-octoxyphenyl)benzotriazole, 2-(2'-hydroxy-3',5'-di-tert-butylphenyl)benzotriazole, 2-(2'-hydroxy-3',5'-diisoamylphenyl)benzotriazole, 2-(2'-hydroxy-3',5'-dimethylphenyl)benzotriazole, 2-(2'-hydroxy-3'-tert-butyl-5'-methylphenyl)-5-chlorobenzotriazole, 2-(2'-hydroxy-3',5'-di-tert-butylphenyl)-5-chlorobenzotriazole, 2-(2'-hydroxy-3',5'-dimethylphenyl)-5-chlorobenzotriazole, 2-(2'-hydroxy-3',5'-dichlorophenyl)benzotriazole, and the like. Of these compounds, 2-(2'-hydroxy-5'-methylphenyl)benzotriazole is particularly preferred.

These compounds may be used singly or in combination with each other. The amount of the benzotriazole-based compound used should be chosen within the range of 0.05 to 3 parts by weight, preferably 0.1 to 2.5 parts by weight per 100 parts by weight of the rubber-modified styrene-based resin as the component (A). If the amount of the benzotriazole-based compound used is less than 0.05 part by weight, the effect of increasing light resistance is not sufficiently exhibited, and if it is more than 3 parts by weight, no additional effect can be obtained.

To the composition of the present invention, various known additives can be added, if necessary, within the range that deteriorates the objects of the present invention. Such known additives include an inorganic filler such as calcium carbonate, talc, mica, silica or asbestos, a reinforcing agent such as glass fibers, carbon fibers or metal whisker, a lubricant such as stearic acid, behenic acid, zinc stearate, calcium stearate, magnesium stearate, or ethylenebisstearoamide, organic polysiloxane, mineral oil, a hindered phenol-based antioxidant such as 2,6-di-tert-butyl-4-methylphenol, stearyl-β-(3,5-di-tert-butyl-4-hydroxyphenyl) propionate, or triethyleneglycol bis-3-(3-tert-butyl-4-hydroxy-5-methylphenyl) propinate, or a phosphorus-based antioxidant such as tris(2,4-di-tert-butylphenyl) phosphite, or 4,4'-butylidenebis (3-methyl-6-tert-butylphenyl-di-tridecyl) phosphite, an ultraviolet absorber, a flame retardant, an antistatic agent, a releasing agent, a plasticizer, a dye, a pigment, and the like.

In addition, other polymers such as polyphenyleneether can be compounded.

The composition of the present invention can be prepared, for example, by compounding the components (A) and (B), and other various additives to be used, if necessary, in a predetermined ratio, and kneading thoroughly at a temperature of 180 to 240°C by the use of e.g., a Banbury mixer, a single screw extruder, a twin screw extruder, a cokneader, or a multi screw extruder.

The composition of the present invention is, as described above, prepared by compounding the general-purpose polystyrene to the rubber-modified styrene-based resin having the occlusion structure, which is excellent in the balance of gloss, stiffness and impact resistance, and thus is suitably used as a material for production of housings of home electric appliances, Office Automation (OA) equipments, and the like.

The composition of the present invention containing, as well as the components (A) and (B), the component (C) (fluid paraffin) is excellent in the balance of gloss, stiffness, impact resistance and heat stability, and furthermore has advantages in that almost no attachment of an oily substance to a mold cavity arises at the time of injection molding, and thus it is suitably used as a material for production of housings of home electric appliances, OA equipments, and the like, or sheets.

The composition of the present invention containing, as well as the components (A) and (B), and the component (C) to be added, if necessary, the component (D) (hindered amine-based compound) and the component (E) (benzotriazole-based compound) is excellent in the balance of gloss, impact resistance and stiffness, and furthermore has good light resistance, and thus it is suitably used as a material for production of parts of OA equipments, home electric applicances and the like, or sheets.

Although the above explanation is made to the composition comprising the components (A) and (B), the similar effect can be obtained by using a composition in which the component (C) is added to only the component (A), or a composition in which the components (D) and (E) are added to only the component (A). However, in the case of such compositions in which only the component (A) is used and the component (B) is not used, gloss tends to decrease although the amount of the oily substance attaching to the mold cavity at the time of injection molding can be decreased.

Injection moldings can be produced by kneading the composition comprising the components (A) and (B), or the components (A), (B) and (C), or the components (A), (B), (C), (D) and (E), and molding by the usual injecting molding method.

Even if the component (B) is added in a proportion exceeding 80% by weight, no additional increase in gloss can be obtained and rather impact resistance is decreased.

In the above case, even if the component (B) is not used and only the component (A) is used, the almost same effect as in the case of combined use of the components (A) and (B) can be obtained. However, if only the component (A) is used and the component (B) is not used, gloss tends to decrease although impact resistance is increased.

In injection molding, the injection molding temperature is chosen within the range of 180 to 280°C, the injection molding pressure is chosen within the range of 50 to 140 kg/cm$^2$·G, and the number of rotations of the screw is chosen within the range of 50 to 300 rpm.

The injection moldings thus obtained are excellent in the balance of gloss, stiffness and impact resistance and futhermore is good in the appearance of a weld portion and the strength of the weld portion and, therefore, they are suitably used for production of products which are required to be good in gloss, weld appearance and weld strength, such as parts of home electric appliances or OA equipments, e.g., VTR front panels, or housings for cleaners, air conditioners, OA equipments, radio cassettes, and the like.

For example, a housing material for home electric appliances or OA equipments is required to have physical properties comparable to those of an ABS resin; the degree of gloss is at least 93%, the Izod impact strength of the weld portion is at least 6.5 kg·cm/cm, and the flexural modulus is at least 20,000 kg/cm$^2$.

By molding the composition of the present invention not by injection molding but by a technique commonly employed for production of sheets, for example by extrusion molding, a styrene-based resin sheet can be obtained. This styrene-based resin sheet can be laminated onto other sheets to produce a laminated sheet.

More specifically, a laminated sheet comprising an outer sheet of the styrene-based resin and an inner sheet of a thermoplastic resin can be produced. As the thermoplastic resin for use in the thermoplastic resin sheet as the inner layer, any thermoplastic resins can be used; those not having good gloss and appearance can also be used. Usually, olefin-based resins, general rubber-modified styrene-based resins having the salami structure, polycarbonate, polyester, polyacrylonitrile, polyvinyl chloride and the like can be used.

Examples of the olefin-based resins are homo- and copolymers of α-olefins such as ethylene, propylene, butene-1, 3-methyl-butene-1, 3-methylpentene-1, and 4-methylpentene-1, and copolymers of these α-olefins and unsaturated monomers copolymerizable therewith. Typical examples are polyethylenes such as high density polyethylene, intermediate density polyethylene, low density polyethylene, linear low density polyethylene, super high molecular weight polyethylene, an ethylene-vinyl acetate copolymer, and an ethylene-ethyl acrylate copolymer; polypropylenes such as a propylene homopolymer, a propylene-ethylene block- or random-copolymer, and a propylene-ethylene-diene copolymer; polybutene-1; poly(4-methylpentene-1); and the like.

The thermoplastic sheet may be a single layer, or a multi-layer such as a two-layer or a three-layer.

In the above styrene-based resin sheet, it is preferred that the thickness of the outer layer is 5 to 3,000 μm, and within the range of 1/50 to 1/2 of the total thickness, and the thickness of the inner layer is within the range of 100 to 3,000 μm. If the thickness of the outer layer is less than 1/50 of the total thickness, surface gloss is sometimes poor. Between the outer layer and the inner layer, if necessary, an adhesive layer of modified polyolefin or an ethylene-vinyl acetate copolymer, or a gas barrier material layer such as an ethylene-vinyl acetate copolymer saponified product, polyamide, polyvinylidene chloride, or an aluminum foil may be provided.

The styrene-based resin sheet can be produced by, for example, a multi-layer blow molding method, or a coextrusion molding method such as a multi-layer sheet molding method. In this case, the molding temperature is usually chosen from the range of 180 to 250°C.

The styrene-based resin single-layer sheet is excellent in the balance of gloss, stiffness and impact resistance, and is less decreased in gloss by heat molding. The laminated sheet of the styrene-based resin sheet and the thermoplastic resin sheet is excellent in gloss and impact resistance. Thus these styrene-based resin sheets are suitably used as materials for production of parts of home electric appliances or OA equipments.

On the surface of (A) general-purpose polystyrene and/or rubber-modified styrene-based resin expanded sheet, a 5 to 100 μm thick styrene-based resin film comprising the same base material as used in the above styrene-based resin sheet (B) may be provided to produce an expanded laminate sheet. If the thickness of the styrene-based resin film is less than 5 μm, mechanical or physical properties of the film are not sufficiently high. Even if it is made thicker than 100 μm, no additional effect can be obtained.

In the above expanded laminate sheet, the base material resin of the expanded sheet as the layer (A) may be a general-purpose polystyrene or a rubber-modified styrene-based resin, or a mixture thereof. The general-purpose polystyrene is not always critical; those on the market as produced by polymerizing a styrene monomer by known polymerization techniques such as bulk polymerization, suspension polymerization, and bulk-suspension polymerization can be used.

The rubber-modified styrene-based resin is not always critical and can be chosen from those commonly used as rubber-modified styrene-based resins.

In the expanded laminate sheet, the thickness of the expanded sheet as the layer (A) is preferably 100 to 3,000 μm, and the expansion ratio of the expanded sheet is preferably 5 to 50 times. If the thickness of the expanded sheet is less than 100 μm, mechanical or physical properties are not sufficiently satisfactory, and if it is more than 3,000 μm, working properties such as heat moldability tend to decrease. If the expansion ratio is less than 5 times, the effect of expansion is not exhibited sufficiently, and if it is more than 50 times, mechanical or physical properties tend to decrease.

The above expanded laminate sheet can be produced by molding a base resin constituting the styrene-based resin expanded sheet as the layer (A) and a base resin constituting the styrene-based resin film as the layer (B) by an extrusion lamination method. This expanding method to form the expanded sheet as the layer (A) is not always critical; a suitable method can be chosen from those commonly employed for production of styrene-based resin expanded sheets. For example, a method in which a chemical blowing agent is added to a base resin, and the resulting mixture is heated to more than the decomposition temperature of the blowing agent and also more than the melt softening point of the base resin, a method in which a physical blowing agent such as an inert gas or a volatile liquid is introduced under pressure into a base resin in the molten state in a molding machine, and then expansion molded, a method in which a base resin in a solid state is impregnated with a volatile liquid, and then heated to more than the melt softening point of the base resin to thereby obtain an expanded sheet, and the like can be employed. Of these methods, the method in which a physical blowing agent such as a volatile liquid is introduced under pressure into a molten base resin and then expansion molded is particularly preferred.

Chemical blowing agents which can be used in the above expansion include azodicarbonamide, diazoaminobenzene, N,N'-dinitrosopentamethylenetetramine, p,p'-oxybis(benzenesulfonylhydrazido), azobisisobutyronitrile, and sodium hydrogencarbonate. These chemical blowing agents can be used singly or in combination with each other. Furthermore, they may be used in combination with blowing aids, if necessary.

Volatile liquids which can be used in the above expansion include dichlorodifluoromethane, trichlorofluoroethane, trichloromonofluoromethane, dichlorotetrafluoroethane, butane, pentane, and hexane. These volatile liquids can be used singly or in combination with each other.

Inert gases which can be used in the above expansion include nitrogen, carbon dioxide, argon and mixed gases thereof.

The above expanded laminate sheet, when heat molded by a technique such as vacuum molding or pressure molding, can provide a molding which is good in quality and has a desired form.

The expanded laminate sheet thus obtained is excellent in the balance of gloss, stiffness and impact resistance and is less decreased in gloss in heat molding, and furthermore has advantages of being light-weight and having good heat insulative properties. Thus it is suitably used as a material for use in production of various food containers such as instant food containers, or polystyrene paper moldings.

EXAMPLES

The present invention is described in greater detail with reference to the following examples, although it is not intended to be limited thereto.

Physical properties of rubber-modified polystyrene, a resin composition, and an injection molding were determined by the methods described below.

(1) Gel Content, Swelling Index

Sample Wc (g) is dissolved in toluene and is subjected to centrifugal separation at 15,000 rpm for 60 minutes. The supernatant is subjected to decantation, and the weight Ws (g) of swollen insoluble portion is measured. This swollen insoluble portion is vacuum dried at 60°C for 24 hours, and the weight Wg (g) of dried insoluble portion is measured.

$$\text{Gel content (wt\%)} = (Wg/Wc) \times 100$$
$$\text{Swelling index} = Ws/Wg$$

(2) Gloss

Measured according to JIS K-7105

(3) Izod Impact Strength

Measured according to JIS K-7110 (23°C, notched)

(4) Flexural Modulus

Measured according to ASTM D-790

(5) Melt Index (MI)

Measured according to 150 R-1133

(6) Falling Weight Impact Strength

The energy until an abrupt decrease in force is first observed in a force-displacement curve is determined by the use of a Rheometrics automatic falling weight impact tester RDT 5000 at a point 125 mm from a gate position of a 270 x 70 x 3 mm injection molded plate and at the center of the plate width (700 mm) under conditions of load 3.76 kg, speed 3.5 m/sec, pore diameter of the specimen fixed point 2 inch, and temperature 23°C, and is indicated as a falling weight impact strength.

(7) Heat Stability

A test sample was purged with a 20 mm sheet extruder at a cylinder temperature of 280°C and then allowed to stand for one day and night.
Next morning, sheet molding was carried out at 280°C to obtain a 10 cm wide x 1.6 m long x 50 μm thick sheet. The number of black spots formed was counted, and based on the number of black spots, heat stability was rated.

(8) Degree of Attachment of Oily Substance

Continuous 500 shot molding was carried out with the mold shown in Fig. 1 and an injection molding machine (Model IS-150E, manufactured by Toshiba Kikai Co., Ltd.) under conditions of molding temperature 240°C, mold temperature 20°C and molding cycle 17 seconds. Then, an oily substance attaching to the inside (area indicated by 1 in Fig. 1) of the mold cavity was dissolved in methylene chloride and placed in a flask, and the amount of the oily substance was quantitatively determined by gas chromatography. Based on the absolute amount of the oily substance, the degree of attachment of the oily substance was rated.
As the fluid paraffin, the following were used.

Fluid Paraffin A

High purity fluid paraffin,
Polynuclear aromatic hydrocarbon content: 0.1 wt% or less,
Aniline point: 113.0°C,
2% Distillation point: 250°C
95% Distillation point: 330°C (according to ASTM D 1160)

KP-32

Industrial fluid paraffin (trade name: Daphny Oil, produced by Idemitsu Kosan Co., Ltd.)

(9) Appearance of Weld Portion

Molding was carried out by the use of an injection molding machine (Model IS-200CN manufactured by Toshiba Kikai Co., Ltd.) and a strip mold (width 120 mm, length 420 mm, thickness 3 mm) as shown in Fig. 2. The weld formed at the back of a cylindrical the molding inserted into a fluid terminal was measured for length. Based on the length of the weld, the appearance (outstandingness) of the weld portion was determined.

(10) Strength of Weld Portion

A test piece for measurement of weld strength was produced by the use of an injection molding machine (Model IS-150E manufactured by Toshiba Kikai Co., Ltd.) and a new oriented mold as shown in Fig. 3. According to JIS K-7110, the Izod impact strength of the weld portion was determined.

Production Example 1

Production of Rubber-Modified Polystyrene Having Single Occlusion Structure

In a 5-liter autoclave were placed 1,167 g of an SB block copolymer (trade name: ZLS-01, produced by Nippon Zeon Co., Ltd.) having a weight average molecular weight of 100,000 and a styrene unit content of 22.6 wt%, 3,000 g of styrene and 1 g of n-dodecylmercaptan as a chain transfer agent, which were then reacted at 130°C for 4 hours while stirring at 300 rpm.
Then, 3,000 g of the above reaction mixture, 3,000 g of water, 10 g of polyvinyl alcohol as a suspension stabilizer, 6 g of benzoylperoxide as a polymerization initiator, and 3 g of dicumylperoxide were placed in a 10-liter autoclave, heated from 80°C to 140°C at a temperature-rising rate of 30°C per hour, and reacted at this temperature for additional 4 hours to obtain beads of rubber-modified polystyrene.
These beads were pelletized by the use of a single screw extruder maintained at 220°C, and then molded.
Physical properties of the molding obtained above, and characteristics of the rubber-modified polystyrene are shown in Table 1.

Production Example 2

Production of Rubber-Modified Polystyrene Having Single Occlusion Structure

704 g of an SB block copolymer (produced by Nippon Zeon Co., Ltd.; trade name: ZLS-01; styrene unit content: 22.6% by weight; molecular weight: 100,000), 3,000 g of styrene and 1 g of n-dodecylmercaptan as a chain transfer agent were placed in a 5-liter autoclave, and reacted with stirring at 300 rpm, at 130°C for 4 hours to obtain a preliminary polymer (I).
Similarly, a preliminary polymer (II) was obtained using 409 g of polybutadiene (produced by Asahi Kasei Co., Ltd.; trade name: NF35AS) and 1 g of n-dodecylmercaptan. (In connection with rubber structure, beads were synthesized under suspension polymerization conditions as shown below and in each, 0.4 μm of occlusion and 1.2 μm of a salami structure were confirmed under an electron microscope.) Then, 2,550 g of the preliminary polymer (I), 450 g of the preliminary polymer (II), 3,000 g of water, 10 g of polyvinyl alcohol as a suspension stabilizer, 6 g of benzoyl peroxide and 3 g of dicumyl peroxide as a polymerization initiator were palced in a 10-liter autoclave, and raised in temperature from 80°C to 140°C at a temperature raising speed of 30°C/hr and further reacted for 4 hours while stirring at 500 rpm to obtain beads of rubber-modified polystyrene. (It was confirmed by an electron microscope that occlusion was 0.4 μm and salami is 1.2 μm.) The beads thus obtained were pelletized by the use of a single screw extruder at 220°C and then molded.
The results of measurement of physical properties of the molding obtained and characteristics of the rubber-modified polystyrene are shown in Table 1.

**EP 0 439 160 B1**

## Table 1

| | Production Example 1* | Production Example 2* |
|---|---|---|
| Rubber Content (wt%) | 28 | 18 |
| Rubber Volume Fraction ($\phi_R$) | 0.244 | 0.16 |
| Thickness of Rubber Phase $\lambda$ ($\mu$m) | 0.023 | 0.023 |
| Area Average Particle Diameter of Rubber Ds ($\mu$m) | 0.26 | 0.68 |
| Ds/Dn | 1.6 | 2.2 |
| Gel/Rubber (weight ratio) | 1.6 | 2.5 |
| Swelling Index | 13 | 13 |
| K value | 0.552 | 0.86 |
| Ratio of Particles with Occlusion Structure (%) | 92 | 87 |
| Gloss (%) | 93 | 94 |
| Izod Impact Strength (kg·cm/cm) (23°C, notched) | 14.1 | 14.6 |
| Falling Weight Impact Strength (J) (23°C, 3.76 kg, 3.5 m/s) | 10 | 14 |
| Flexural Modulas (kg/cm$^2$) | 21,800 | 22,200 |
| Melt Index (g/10 min) | 2.0 | 2.8 |

\* An electro micrograph showed that in both the rubber-modified polystyrenes obtained in Production Examples 1 and 2, the dispersed rubber polymer had a plane of symmetry.

Example 1

75 parts by weight of the rubber-modified polystyrene having an occlusion structure (Occlusion HIPS) as obtained in Production Example 1 and 25 parts by weight of general-purpose polystyrene (GPPS) (trade name: Idemitsu Styrol HH30, produced by Idemitsu Petrochemical Co., Ltd., MI: 4 g/10 min) were dry blended, and then kneaded in a single screw kneader under conditions of temperature 200°C and number of revolusions 80 rpm to obtain pellets.

These pellets were injection molded to form a test piece, which was then measured for degree of gloss, flexural modulus and Izod impact strength. The results are shown in Table 2.

11

Examples 2 to 4

The procedure of Example 1 was repeated with the exception that the compounding proportions of Occlusion HIPS and GPPS were changed as shown in Table 2. The results are shown in Table 2.

Example 5

The procedure of Example 1 was repeated with the exception that the Occlusion HIPS obtained in Production Example 1 was replaced by the Occlusion HIPS obtained in Production Example 2. The results are shown in Table 2.

Example 6

The procedure of Example 1 was repeated with the exception that GPPS Idemitsu Styrol NH30 was replaced by GPPS Idemitsu Styrol HF10 (produced by Idemitsu Petrochemical Co., Ltd., MI; 30 g/10 min). The results are shown in Table 1.

Example 7

The procedure of Example 1 was repeated with the exception that the Occlusion HIPS obtained in Production Example 1, the rubber-modified polystyrene having a salami structure (Salami HIPS) (trade name: Idemitsu Styrol HT 55, produced by Idemitsu Petrochemical Co., Ltd., MI: 2.0 g/10 min), and the GPPS Idemitsu Styrol NH 30 were compounded in the proportion shown in Table 2. The results are shown in Table 2.

Comparative Example 1

The procedure of Example 1 was repeated with the exception that the Occlusion HIPS obtained in Production Example 1 was replaced by Salami HIPS (trade name: Idemitsu Styrol HT 55). The results are shown in Table 2.

Comparative Example 2

The procedure of Example 1 was repeated with the exception that the Occlusion HIPS obtained in Production Example 1 was not used. The results are shown in Table 2.

Comparative Examples 3 and 4

Physical properties of an ABS resin (trade name: Toyolak 500, produced by Toray Co., Ltd.) (Comparative Example 3) and Salami HIPS (trade name: Idemitsu Styrol HT 55) (Comparative Example 4) are shown in Table 2.

## Table 2

| | Occlusion HIPS Type | Amount | GPPS Type | Amount | Salami HIPS or ABS Type | Amount | Gloss (%) | Flexural Modulus (kg/cm$^2$) | Izod Impact Strength (23°C, notched) (kg·cm/cm) |
|---|---|---|---|---|---|---|---|---|---|
| Example 1 | Production Example 1 | 75 | HH30 | 25 | – | – | 95 | 24,500 | 10.8 |
| " 2 | " | 50 | " | 50 | – | – | 98 | 27,500 | 7.5 |
| " 3 | " | 25 | " | 75 | – | – | 98 | 30,500 | 4.4 |
| " 4 | " | 85 | " | 15 | – | – | 94 | 23,500 | 12.2 |
| " 5 | Production Example 2 | 75 | " | 25 | – | – | 96 | 25,000 | 4.5 |
| " 6 | " | 75 | HF10 | 25 | – | – | 96 | 24,000 | 4.0 |
| " 7 | " | 70 | HH30 | 25 | HT55 | 5 | 93 | 24,200 | 11.1 |
| " 8 | " | 45 | " | 50 | " | 5 | 96 | 27,300 | 7.8 |
| Comparative Example 1 | – | – | " | 25 | " | 75 | 91 | 26,300 | 8.0 |
| " 2 | – | – | " | 100 | – | – | 100 | 33,500 | 1.2 |
| " 3 | – | – | – | – | ABS | 100 | 95 | 26,500 | 8.8 |
| " 4 | – | – | – | – | HT55 | 100 | 89 | 24,000 | 10.2 |

Proportion of Component (parts by weight) — Physical Properties

HH30: GPPS (trade name: Idemitsu Styrol HH30, produced by Idemitsu Petrochemical Co., Ltd., MI: 4)

HF10: GPPS (trade name: Idemitsu Styrol HF10, produced by Idemitsu Petrochemical Co., Ltd., MI: 30)

HT55: Salami HIPS (trade name: Idemitsu Stryol HT55, produced by Idemitsu Petrochemical Co., Ltd., MI: 2.0)

ABS: ABS resin (trade name: Toyolak 500, produced by Toray Co., Ltd.)

EP 0 439 160 B1

Example 9

To 50 parts by weight of the rubber-modified styrene-based resin having an occlusion structure (Occlusion HIPS) as obtained in Production Example 1 and 50 parts by weight of general-purpose polystyrene (GPPS) were compounded 3 parts by weight of fluid paraffin A, which were blended and then kneaded by the use of a single screw kneader under conditions of temperature 200°C and number of revolutions 80 rpm to obtain pellets.

These pellets were extrusion molded to produce a test sheet. This test sheet was evaluated for heat stability, and according to the testing method for attachment of oily substance, the amount of an oily substanced attaching to the inside of the mold cavity was determined. The results are shown in Table 3.

Comparative Example 5

The procedure of Example 9 was repeated with the exception that 100 parts by weight of Salami Structure HIPS (trade name: Idemitsu Styrol HT53, produced by Idemitsu Petrochemical Co., Ltd., MI: 4 g/10 min) was used as the styrene-based resin, and as the fluid paraffin, 1 part by weight of KP-32 was used. The results are shown in Table 3.

<u>Table 3</u>

| | Proportion of Component (parts by weight) | | | | | | Evaluation | | | | |
|---|---|---|---|---|---|---|---|---|---|---|---|
| | HIPS | | GPPS | | Fluid Paraffin | | Heat Stability (Number of Black Spots) | | | Amount of Oily Sub- | Gloss (%) |
| | Type | Amount | Type | Amount | Type | Amount | <0.2 mm | 0.2–0.5 mm | >0.5 mm | stance(g) | |
| Example 9 | Production Example 1 | 50 | b | 50 | Fluid paraffin A | 3 | 12 | 7 | 0 | 0.56 | 98 |
| Comparative Example 5 | a | 100 | – | – | KP-32 | 1 | 243 | 32 | 5 | 2.55 | 85 |

a: Salami Structure HIPS (trade name: Idemitsu Styrol HT53, produced by Idemitsu Petrochemical Co., Ltd., MI: 4)

b: GPPS (trade name: Idemitsu Styrol HH30, produced by Idemitsu Petrochemical Co., Ltd., MI: 4)

EP 0 439 160 B1

Example 10

A mixture of 50 parts by weight of the rubber-modified polystyrene having an occlusion structure with a plane of symmetry (Occlusion HIPS) as obtained in Production Example 1, and 50 parts by weight of general-purpose polystyrene (GPPS) was injection molded by the use of an injection molding machine (Model IS-200CN, manufactured by Toshiba Kikai Co., Ltd.) having a mold clamping force of 2,000 tons and a strip mold (width 120mm, length 420 mm, thickness 3 mm) as shown in Fig. 2 under conditions of injection molding temperature 200°C, injection molding pressure 120 kg/cm$^2$·G and number of revolutions of screw 80 rpm. The molding thus obtained was measured for weld length, and the appearance of the weld portion was evaluated.

Injection molding was carried out in the same manner as above by the use of an injection molding machine (Model IS-150E, manufactured by Toshiba Kikai Co., Ltd.) having a mold clamping force of 150 tons. The molding thus obtained was measured for weld portion strength (Izod impact strength). In this case, a new oriented mold (thickness 3 mm) as shown in Fig. 3 was used as the mold. The results are shown in Table 4.

Comparative Example 6

The procedure of Example 10 was repeated with the exception that the Occlusion HIPS obtained in Production Example 1 was replaced by rubber-modified polystyrene (Salami HIPS) having a salami structure (trade name: Idemitsu Styrol HT 55, produced by Idemitsu Petrochemical Co., Ltd., MI: 2.0 g/10 min). The results are shown in Table 4.

Table 4

| | HIPS | | GPPS | | Weld Length (mm) | Appearance of Weld Portion | Izod Impact Strength of Weld Portion (kg·cm/cm) |
|---|---|---|---|---|---|---|---|
| | Type | Amount (parts by weight) | Type | Amount (parts by weight) | | | |
| Example 10 | Production Example 1 | 50 | a | 50 | 7 | ⊙ | 6.8 |
| Comparative Example 6 | m | 50 | a | 50 | 60 | x | 3.2 |

a: GPPS (trade name: Idemitsu Styrol HH30, produced by Idemitsu Petrochemical Co., Ltd., MI: 4)

m: Salami HIPS (trade name: Idemitsu Styrol HT55, produced by Idemitsu Petrochemical Co., Ltd., MI: 2.0)

Rating of Appearance of Weld Portion

⊙ : Excellent

o : Good

x : Poor

Injection moldings for parts of home electric appliances or OA equipments for which gloss and appearance of a weld portion are important are required to have the characteristics that the Izod impact strength is at least 6.5 kg·cm/cm, the flexural modulus is at least 20,000 kg/cm$^2$, and the degree of gloss is at least 93%.

In Example 10, the above characteristics are satisfied and the appearance of the weld portion is good, while in Comparative Example 6, the appearance of the weld portion and the impact strength of the weld portion are poor.

Example 11

50 parts by weight of the rubber-modified styrene-based resin (Occlusion HIPS) having an occlusion structure as obtained in Production Example 1 and 50 parts by weight of general-purpose polystyrene (GPPS) were dry blended and then kneaded in a single screw kneader under conditions of temperature 200°C and number of revolutions 80 rpm to obtain pellets.

These pellets were injection molded to obtain a test sheet for measurement of physical properties, and this test sheet was subjected to heat molding (vacuum molding) to produce a heat molding. These test sheet and molding were measured for physical properties. The results are shown in Table 6.

Sheet molding and heat molding (vacuum molding) conditions are shown below.

Sheet Molding Conditions

Sheet molding machine:     35 mm extruder manufactured by Shinko Kikai Seisakujo Co., Ltd.

[Molding Conditions]

Preset Temperature

| Hopper Side | | | Die Side | | |
|---|---|---|---|---|---|
| H1 | H2 | H3 | H4 | H5 | Touch roll |
| 190°C | 210°C | 220°C | 220°C | 220°C | 85°C |

Number of Revolutions of Screw: 130 rpm (Max)
Pulling Speed: 0.7 m/min
Sheet Thickness: 1.5 mm
Degree of Lip Opening: 2.0 mm

Heat Molding (Vacuum Molding) Conditions

Vacuum molding machine:     Large-sized vacuum pressure molding machine manufactured by Asano Kenkyujo Co., Ltd.

Molding Conditions: Shown in Table 5.

Table 5

| Conditions | Preset Value |
|---|---|
| Heating time | 22.0 sec |
| Upper table time | 30.0 sec |
| Upper table delay | 0.0 sec |
| Lower table time | 35.0 sec |
| Lower table delay | 1.4 sec |
| Vacuum delay | 4.5 sec |
| Fan delay | 1.5 sec |
| Mold temperature | 45.0°C |
| Upper heater | NO4-15 95 V |
| Lower heater | NO4-11 95 V |

Comparative Example 7

The procedure of Example 11 was repeated with the exception that the Occlusion HIPS obtained in Production Example 1 was replaced by HIPS Idemitsu Styrol ET66. The results are shown in Table 6.

Table 6

| | Proportion of Component (parts by weight) | | | | Physical Properties | | | | |
| | HIPS | | GPPS | | Test Piece for Physical Properties | | Degree of Gloss (%) | | |
| | Type | Amount | Type | Amount | Izod Impact Strength (kg·cm/cm) | Flexural Modulus (kg/cm$^2$) | Test Piece for Physical Properties | Sheet | Heat Molding |
|---|---|---|---|---|---|---|---|---|---|
| Example 11 | Production Example 1 | 50 | b | 50 | 7.5 | 27,500 | 98 | 100 | 98 |
| Comparative Example 7 | a | 50 | b | 50 | 7.8 | 25,500 | 86 | 98 | 85 |

a: HIPS (trade name: Idemitsu Styrol ET66, produced by Idemitsu Petrochemical Co., Ltd., MI: 2)

b: GPPS (trade name: Idemitsu Styrol HH30, produced by Idemitsu Petrochemical Co., Ltd., MI: 4)

EP 0 439 160 B1

Example 12

A mixture of 50 parts by weight of the rubber-modified styrene-based resin (Occlusion HIPS) having an occlusion structure as obtained in Production Example 1 and 50 parts by weight of general-purpose polystyrene (GPPS), an ethylenevinyl acetate copolymer (EVA) (trade name: Ultrathene UE634, produced by Toso Co., Ltd.) as an adhesive, and polypropylene (PP) were molded by the use of a 3-type 3-layer T die molding machine to produce a laminate sheet having a total thickness of 0.1 mm. Co-extrusion molding was carried out controlling the layer thickness ratio so that styrene-based resin layer/adhesive layer/polypropylene layer = 40/30/30, and maintaining the resin temperature in each screw at 200 to 220°C.

The degree of gloss of the styrene-based resin side of the laminate sheet obtained above, and the T peeling strength between the styrene-based resin layer and the polypropylene layer were measured. The results are shown in Table 7.

Comparative Example 8

The procedure of Example 12 was repeated with the exception that the Occlusion HIPS obtained in Production Example 1 was replaced by rubber-modified polystyrene (trade name: Idemitsu Styrol HT 55, produced by Idemitsu Petrochemical Co., Ltd., MI: 2.0 g/10 min). The results are shown in Table 7.

Table 7

| Outer Layer (1) Type of Polystyrene | Adhesive Layer (2) Type | Inner Layer (3) Type | Thickness Ratio (1)/(2)/(3) | Degree of Surface Gloss (%) | T-Peeling Strength (kg/cm) |
|---|---|---|---|---|---|
| Example 12 | Production Example 1 + b | EVA | PP | 40/30/30 | 100 | 9 |
| Comparative Example 8 | c | EVA | PP | 40/30/30 | 33 | 10 |

b: GPPS (trade name: Idemitsu Styrol HH30, produced by Idemitsu Petrochemical Co., Ltd., MI: 4)

c: HIPS (trade name: Idemitsu Styrol HT55, produced by Idemitsu Petrochemical Co., Ltd., MI: 2.0)

Example 13

50 parts by weight of the rubber-modified styrene-based resin (Occlusion HIPS) having an occlusion structure as obtained in Production Example 1 and 50 parts by weight of general-purpose polystyrene (GPPS) were dry blended, and kneaded by the use of a single screw kneader under conditions of temperature 200°C and number of revolutions 80 rpm to obtain pellets. These pellets were injection molded to produce a test piece for measurement of physical properties. The results are shown in Table 8.

The above pellets were placed into an extruder so as to constitute the laminate side, while an expanded layer of Idemitsu Styrol HH30 (produced by Idemitsu Petrochemical Co., Ltd., good gloss, extrusion grade) was made an inner side layer. In this manner, they were coextruded under the conditions shown below to obtain a laminate sheet. This laminate sheet was subjected to heat molding (vacuum molding) under the conditions shown below to obtain a molding. This molding was measured for physical properties. The results are shown in Table 8.

The expansion ratio of the expanded layer in the laminate sheet was 20 times.

Sheet Molding Conditions

Preset Temperature of Extruder

(Laminate side)

| H1 | H2 | H3 | H4 | H5 |
|---|---|---|---|---|
| 190°C | 210°C | 220°C | 220°C | 220°C |

(Inner side)

| H1 | H2 | H3 | H4 | H5 |
|---|---|---|---|---|
| 140°C | 150°C | 160°C | 160°C | 160°C |

Touch Roll Temperature: 85°C
Number of Revolutions of Screw: 130 rpm (Max)
Pulling Speed: 0.7 m/min
Sheet Thickness:

Laminate side: 50 μm
Inner side: 1.5 mm

Heat Molding (Vacuum Molding) Conditions

Vacuum Pressure Molding Machine:          Large-sized vacuum molding machine produced by Asano Kenkyujo Co., Ltd.

Molding Conditions: Shown in Table 5.

Comparative Example 9

The procedure of Example 13 was repeated with the exception that the Occlusion HIPS obtained in Production Example 1 was replaced by HIPS (trade name: Idemitsu Styrol ET66). The results are shown in Table 8.

Table 8

| | Proportion of Component (parts by weight) | | | | Physical Properties | | | | |
| | HIPS | | GPPS | | Test Piece for Physical Properties | | Degree of Gloss (%) | | |
| | Type | Amount | Type | Amount | Izod Impact Strength (kg·cm/cm) | Flexural Modulus (kg/cm$^2$) | Test Piece for Physical Properties | Laminate Sheet | Heat Molding |
|---|---|---|---|---|---|---|---|---|---|
| Example 13 | Production Example 1 | 50 | b | 50 | 7.5 | 27,500 | 98 | 100 | 98 |
| Comparative Example 9 | a | 50 | b | 50 | 7.8 | 25,500 | 86 | 98 | 85 |

a: HIPS (trade name: Idemitsu Styrol ET66, produced by Idemitsu Petrochemical Co., Ltd., MI: 2)

b: GPPS (trade name: Idemitsu Styrol HH30, produced by Idemitsu Petrochemical Co., Ltd., MI: 4)

## EP 0 439 160 B1

### Claims

**1.** A high gloss, impact resistant styrene-based resin composition containing (A) a rubber-modified styrene-based resin in which the form of dispersed rubber is an occlusion structure, and (B) an unmodified polystyrene in a weight ratio of 20:80 to 95:5, wherein said rubber-modified styrene-based resin has a dispersed rubber form, which has at least 70 % of the occlusion structure with a plane of symmetry, said occlusion structure refers to the structure that not more than five occlusion units comprising a core of the styrene-based polymer and a shell of the rubber-like polymer are contained in one particle and at least 50 % of the particles contain only one occlusion unit, and the dispersed rubber form is such, that the rubber-like polymer in the form of particles having an area average diameter of 0.1 μm to 0.7 μm and a ratio of area average diameter to number average particle diameter of 1.0/1 to 2.5/1 is dispersed in the styrene-based polymer; the volume fraction of the rubber-like polymer particles in the rubber-modified styrene-based resin is at least 0.18, said volume fraction is calculated from the equation $k = \phi_R\{1-[(D_s/2-\lambda)/(D_s/2)]^3\}^{-1}$ (wherein $\phi_R$ indicates a volume fraction of the rubber-like polymer in the composition, $D_s$ indicates an area average particle diameter (radius) of the rubber-like polymer, and $\lambda$ indicates a thickness of a rubber-like polymer phase and is not more than 0.10 μm).

### Patentansprüche

**1.** Hochglänzende, schlagfeste Harzzusammensetzung auf Styrolbasis, die (A) ein kautschukmodifiziertes Harz auf Styrolbasis, bei dem die Form des dispergierten Kautschuks eine Okklusionsstruktur ist, und (B) ein nichtmodifiziertes Polystyrol in einem Gewichtsverhältnis von 20:80 bis 95:5 enthält, wobei das kautschukmodifizierte Harz auf Styrolbasis eine dispergierte Kautschukform hat, die zu wenigstens 70 % die Okklusionsstruktur mit einer Symmetrieebene aufweist, die Okklusionsstruktur sich auf eine Struktur bezieht, die nicht mehr als fünf Okklusionseinheiten, die einen Kern des Polymerisats auf Styrolbasis und einer Hülle des kautschukartigen Polymerisats aufweisen, in einem Partikel enthält, und bei der wenigstens 50 % der Partikel nur eine Okklusionseinheit aufweisen, die dispergierte Kautschukform so ausgestaltet ist, daß das kautschukartige Polymerisat in der Form von Partikeln mit einem flächengemittelten Durchmesser von 0,1 μm bis 0,7 μm und einem Verhältnis des flächengemittelten Durchmessers zu dem anzahlgemittelten Partikeldurchmesser von 1,0/1 bis 2,5/1 in dem Polymerisat auf Styrolbasis dispergiert ist, und wobei der Volumenanteil der kautschukartigen Polymerisatpartikel in dem kautschukmodifizierten Harz auf Styrolbasis wenigstens 0,18 ist und der Volumenanteil mit der Gleichung $k = \phi_R\{1-[(D_s/2-\lambda)/(D_s/2)]^3\}^{-1}$ berechnet wird (worin $\phi_R$ einen Volumenanteil des kautschukartigen Poly-merisats in der Zusammensetzung kennzeichnet, $D_s$ einen flächengemittelten Partikeldurchmesser (Umkreis) des kautschukartigen Polymerisats kennzeichnet und $\lambda$ eine Dicke einer kautschukartigen Polymerisat-phase anzeigt, die nicht mehr als 0,10 μm beträgt).

### Revendications

**1.** Composition de résine à base de styrène résistant au choc et à brillance élevée, contenant (A) une résine à base de styrène modifiée par un caoutchouc dans laquelle la forme du caoutchouc dispersé est une structure à occlusions, et (B) un polystyrène non-modifié, selon un rapport en poids compris entre 20/80 et 95/5, dans laquelle ladite résine à base de styrène modifiée par un caoutchouc a une forme de caoutchouc dispersé, dont au moins 70 % de la structure à occlusions présente un plan de symétrie, ladite structure à occlusions se rapportant à une structure telle que pas plus de cinq motifs d'occlusion comprenant un coeur constitué du polymère à base de styrène et une gaine constituée du polymère caoutchouteux sont contenus dans une particule, et au moins 50 % des particules ne contiennent qu'un motif d'occlusion, et la forme du caoutchouc dispersée est telle que le polymère caoutchouteux, sous la forme de particules ayant un diamètre moyen superficiel de 0,1 à 0,7 μm et un rapport du diamètre moyen superficiel au diamètre moyen en nombre compris entre 1,0/1 et 2,5/1, est dispersé dans le polymère à base de styrène ; la fraction volumique des particules de polymère caoutchouteux dans la résine à base de styrène modifiée par un caoutchouc est d'au moins 0,18, ladite fraction volumique étant calculée par l'équation $k = \phi_R\{1-[(D_s/2-\lambda)/(D_s/2)]^3\}^{-1}$ (où $\phi_R$ désigne la fraction volumique du polymère caoutchouteux dans la composition, $D_s$ désigne le diamètre moyen superficiel (rayon) des particules de polymère caoutchouteux, et $\lambda$ désigne l'épaisseur d'une phase de polymère caoutchouteux et vaut au plus 0,10 μm).

# F I G . 1

FIG.2

FIG.3